# EUROPÄISCHE PATENTANMELDUNG

(11) **EP 0 998 981 A2**
(43) Veröffentlichungstag der Anmeldung: **10.05.2000**
(21) Anmeldenummer: 99117736.1
(22) Anmeldetag: 08.09.1999
(51) Int. Cl.: B03B 5/56, A23N 12/02

(54) **Vorrichtung zum Waschen von stückigem Schüttgut**

(30) Priorität: 06.11.1998 DE 29819870 U
(71) Anmelder: Gebr. Bütfering Maschinenfabrik GmbH, 59269 Beckum (DE)
(72) Erfinder: Bütfering, Antonius, 59269 Beckum (DE); Bütfering, Franz-Josef, 59269 Beckum (DE)
(74) Vertreter: Tetzner, Michael, Dipl.-Ing.

(57) **Zusammenfassung**

Vorrichtung zum Waschen von stückigem Schüttgut, insbesondere von Feldfrüchten und Steinen, mit wenigstens einer um ihre Längsmittelachse rotierend antreibbaren Waschtrommel (1), die einen an seinem Umfang im wesentlichen geschlossenen Trommelmantel (2) zur Aufnahme von Waschflüssigkeit und zu waschendem Schüttgut, einen Einlauf (3) an einem Trommelende (1a) und einen Auslauf (4) am entgegengesetzten anderen Trommelende (1b) sowie wenigstens eine Waschflüssigkeits-Zuführeinrichtung (5) enthält, dadurch gekennzeichnet, daß die Waschtrommel einen polygonalen Innenquerschnitt aufweist.

## Beschreibung

Die Erfindung betrifft eine Vorrichtung zum Waschen von stückigem Schüttgut, insbesondere von Feldfrüchten und Steinen, entsprechend dem Oberbegriff des Anspruches 1.

Waschvorrichtungen der vorausgesetzten Art sind aus der Praxis bereits in verschiedenen Ausführungsformen bekannt.

So werden beispielsweise in der Zuckerindustrie Waschvorrichtungen mit im Querschnitt runden, rotierend antreibbaren Waschtrommeln verwendet, in denen zum Beispiel angelieferte Zuckerrüben unter Zuführung von Waschflüssigkeit, insbesondere Wasser, einem Vorwaschgang und einem Hauptwaschgang unterworfen werden können. Um dabei den Wascheffekt zu intensivieren, sind in die Waschtrommel im allgemeinen Rührelemente und Transportelemente eingebaut. Die Praxis hat nun jedoch gezeigt, daß diese Rühr- und Transportelemente den Reinigungseffekt dieser Feldfrüchte nur geringfügig verbessern und erhebliche Nachteile mit sich bringen, zu denen vor allem eine Beschädigung von Feldfrüchten, relativ hohe Einbaukosten (Herstellungskosten), unerwünschte Folgekosten (weil diese Einbauelemente einem starken Verschleiß unterliegen) sowie unerwünschte Geräusche bei Steinen zu nennen sind.

Der Erfindung liegt daher die Aufgabe zugrunde, eine Vorrichtung der im Oberbegriff des Anspruches 1 vorausgesetzten Art zu schaffen, die sich bei relativ günstigen Herstellungskosten durch einen besonders intensiven Waschvorgang für das Schüttgut und einen dabei weitgehend einbautenfreien Innenquerschnitt der wenigstens einen Waschtrommel auszeichnet.

Diese Aufgabe wird erfindungsgemäß durch das Kennzeichen des Anspruches 1 gelöst, wobei vorteilhafte Ausgestaltungen der Erfindung in den Unteransprüchen angegeben sind.

Ein wesentlicher Gedanke der vorliegenden Erfindung wird darin gesehen, daß die (jede) Waschtrommel einen polygonalen Innenquerschnitt aufweist. Durch diese Vieleckform wird in der sich um ihre Längsmittelachse drehenden Waschtrommel zum einen eine intensive Mischung des zu waschenden Gutes untereinander herbeigeführt, und zum andern wird durch diese Vieleckform das Schüttgut während der Trommeldrehung über eine entsprechende Umfangsstrecke angehoben, woraufhin es ab einer bestimmten Umfangshöhe (Kippunkt) herunterrollt und in die im unteren Teil der Waschtrommel befindliche Waschflüssigkeit eingetragen wird. Gleichzeitig wird durch diese in der Waschtrommel befindliche Waschflüssigkeit aufgrund des polygonalen Trommelinnenquerschnitts gewissermaßen eine Flüssigkeitswelle erzeugt und auf bzw. gegen das Schüttgut geworfen, wodurch ein besonders intensiver Spül- und Wascheffekt bewirkt wird. Vergleicht man dazu die bekannten Waschtrommeln mit rundem Trommelquerschnitt, dann läuft dort - bei sich drehender Trommel - die Waschflüssigkeit in Trommelumfangsrichtung gewissermaßen gleichmäßig vor dem Schüttgut her, weshalb nur ein sehr ungenügender Reinigungseffekt erzielt werden kann und weshalb eine Verbesserung durch Einbau der erwähnten Rührelemente versucht worden ist.

Bei den der Erfindung zugrundeliegenden Versuchen konnte bestätigt werden, daß bei einer erfindungsgemäß ausgeführten Waschtrommel bereits allein durch den polygonalen Innenquerschnitt ein gegenüber den oben geschilderten bekannten Ausführungen (mit rundem Querschnitt und Einbauelementen) erheblich verbesserter Wasch- und Reinigungseffekt des Schüttgutes, insbesondere von Feldfrüchten (Zuckerrüben, Kartoffeln u. dgl.) und Steinen, erzielt werden kann. Dies bedeutet somit auch, daß der Innenquerschnitt dieser Waschtrommel weitgehend einbautenfrei, d.h. unter bewußtem Weglassen von Rührelementen oder dergleichen an der Innenumfangswand der Waschtrommel ausgeführt sein kann. Hierdurch können die Herstellungskosten der Waschtrommel - im Vergleich zu den bekannten Ausführungen - herabgesetzt werden, wobei wegen fehlender Einbauelemente auch keine dadurch bedingten Wartungs- bzw. Folgekosten anfallen.

Gemäß einer vorteilhaften Ausgestaltung der Erfindung erweitert sich der Trommelmantel der Waschtrommel vom Trommeleinlaufende zum Trommelauslaufende etwa konusförmig, d.h. dieser Trommelmantel ist mit einer sich vom Trommeleinlaufende zum Trommelauslaufende erweiternden Konusform bzw. Pyramidenstumpfform ausgebildet. Die Größe dieser Konizität bzw. der Konus-/Öffnungswinkel dieser Konusform braucht dabei nur so groß gewählt zu werden, daß dadurch eine zuverlässige und ausreichende Förderung des zu waschenden Schüttgutes vom Trommeleinlaufende zum Trommelauslaufende gewährleistet ist, d.h. der Trommelmantel braucht nur relativ leicht konisch ausgeführt zu sein, da die Drehbewegung der Waschtrommel die Förderung des Schüttgutes in Richtung des Trommelauslaufendes unterstützt. Besonders am Trommelinnenumfang angebrachte Förderelemente wie bei den oben erläuterten bekannten Ausführungen können dadurch ebenfalls entfallen.

Die Erfindung sei nachfolgend anhand der Zeichnung näher erläutert. In dieser Zeichnung zeigen
- Fig. 1: eine Längsansicht der erfindungsgemäßen Waschvorrichtung;
- Fig.2: eine Querschnittsansicht etwa entlang der Linie II-II in Fig.1;
- Fig.3: eine ganz schematische Längsschnittansicht einer Ausführungsvariante zum Beispiel der Figuren 1 und 2;
- Fig.4: eine ganz schematische Längsschnittansicht durch ein weiteres Ausführungsbeispiel der erfindungsgemäß ausgebildeten Waschtrommel.

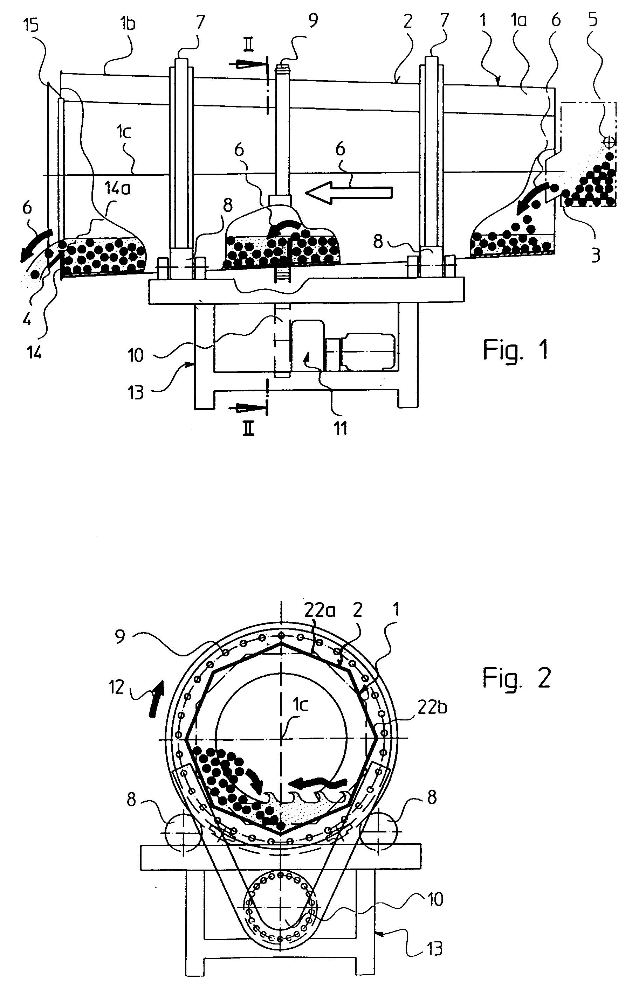

Ein erstes Ausführungsbeispiel der erfindungsgemäßen Waschvorrichtung sei anhand der Fig.1 und 2 der Zeichnung beschrieben.

Bei diesem ersten Ausführungsbeispiel enthält die Waschvorrichtung als einen wesentlichen Bauteil eine in Form einer Drehtrommel ausgeführte Waschtrommel 1 mit einem an seinem Umfang im wesentlichen geschlossenen Trommelmantel 2 zur Aufnahme von Waschflüssigkeit, insbesondere Waschwasser, und zu waschendem bzw. zu reinigendem Schüttgut. Die Waschtrommel 1 weist an ihrem einen Trommelende 1a einen Einlauf 3 und an ihrem entgegengesetzten anderen Trommelende 1b einen Auslauf 4 auf. Außerdem ist diese Waschtrommel 1 mit einer Zuführeinrichtung für Waschflüssigkeit, also mit einer Wasserzuführeinrichtung 5 versehen, die - wie in Fig.1 vereinfacht angedeutet - am Schüttguteinlauf 3 und somit am Trommeleinlaufende 1a angeordnet sein kann. Der Förderweg bzw. die Förderrichtung des zu waschenden Schüttgutes ist in Fig.1 durch Pfeile 6 angedeutet.

Die Waschtrommel 1 ist in an sich bekannter Weise drehbar abgestützt, beispielsweise durch auf dem Trommelmantel 2 befestigte Laufringe 7, die sie auf entsprechenden Tragrollen 8 drehbar abstützen. Auch der Drehantrieb für die Waschtrommel 1 kann in an sich bekannter Weise ausgeführt sein, beispielsweise durch einen Zahnriemenantrieb, einen Kettentrieb, einen Zahnkranz-Zahnritzel-Antrieb oder dergleichen, wobei ein Zahnriemenantrieb besonders bevorzugt wird, weil er einen besonders ruhigen Lauf gewährleistet. Dementsprechend ist auf dem Trommelmantel ein Triebstock (Zahnkranz für Zahnriemen) 9 drehfest angebracht, der über einen Zahnriemen mit einem Antriebszahnritzel 10 antriebsverbunden ist, das seinerseits von einer geeigneten Antriebseinrichtung (z.B. Getriebe und Motor) 11 angetrieben wird. Auf diese Weise kann die Drehtrommel 1 in Richtung des Pfeiles 12 (Fig.2) um ihre Längsmittelachse 1c rotierend angetrieben werden.

Bei dieser erfindungsgemäßen Waschvorrichtung weist die Waschtrommel 1, d.h. insbesondere ihr Trommelmantel 2, einen polygonalen (lichten) Innenquerschnitt auf, wie es in Fig.2 zu erkennen ist. Dieser Innenquerschnitt kann jede beliebige und geeignete Vieleckform, insbesondere eine regelmäßige, gleichseitige Vieleckform aufweisen, wobei ein Sechseck-, Achteck- und Zwölfeck-Querschnitt - je nach Größe der Waschtrommel - bevorzugt werden kann; im Beispiel der Fig.1 und 2 ist ein regelmäßiger bzw. gleichseitiger achteckiger Innenquerschnitt vorgesehen. In zweckmäßiger Weise ist der Trommelmantel 2 sich vom Trommeleinlaufende 1a zum Trommelauslaufende 1b konusförmig bzw. pyramidenstumpfförmig erweiternd ausgebildet.

Die Waschtrommel 1 kann hierbei - wie veranschaulicht - über die Tragrollen 8 auf einem Traggerüst 13 abgestützt und gelagert sein, in dem auch die Antriebseinrichtung 11 angeordnet ist.

Wenn der Konusöffnungswinkel des konischen Trommelmantels 2 groß genug gewählt wird, um dadurch einen zuverlässigen Transport bzw. eine zuverlässige Förderung des zu waschenden Schüttgutes entsprechend den Pfeilen 6 durch die Waschtrommel 1 zu gewährleisten, kann die Längsmittelachse 1c der Waschtrommel 1 (und damit auch des Trommelmantels 2) im wesentlichen horizontal angeordnet sein, wodurch auch eine relativ einfache Drehabstützung und Lagerung sowie eine relativ günstige Antriebsverbindung (Zahnriementrieb mit Triebstock 9 und Antriebszahnritzel 10) erreicht werden kann.

Grundsätzlich ist es jedoch im Bedarfsfalle, d.h. bei entsprechender Formgebung des Trommelmantels 2, auch möglich, die Waschtrommel 1 mit ihrer Längsmittelachse 1c in Förderrichtung (Pfeile 6) des Schüttgutes unter einem flachen bzw. spitzen Winkel gegenüber der Horizontalen nach unten geneigt anzuordnen. Letzteres ist vor allem bei einem relativ kleinen Konuswinkel oder dann erforderlich, wenn der Trommelmantel der Waschtrommel vom Trommeleinlaufende zum Trommelauslaufende einen im wesentlichen gleichbleibend großen Innenquerschnitt aufweist.

Bei dieser Waschtrommel 1 kann es ferner besonders zweckmäßig sein, wenn der Trommelmantel 2 an seiner Innenseite eine relativ abriebfeste und/oder geräuschdämmende Innenauskleidung aufweist. Eine solche Innenauskleidung kann vorteilhaft z.B. im wesentlichen aus relativ abriebfestem Gummi oder gummiartigem Kunststoffmaterial hergestellt und beispielsweise in Form von Auskleidungsmatten oder -platten gesondert und ggf. auswechselbar an der Innenumfangsseite des Trommelmantels 2 befestigt sein.

Wie in Fig.1 am linken Ende der Waschtrommel 1, d.h. im unteren Bereich des Trommelauslaufendes 1b durch teilweise geschnittene Darstellung veranschaulicht ist, wird es für zweckmäßig gehalten, wenn zumindest an der Stirnseite des Trommelauslaufendes 1b eine ringförmige Stirnwand 14 fest angeordnet ist, die den lichten Durchtrittsquerschnitt dieses Trommelauslaufendes 1b von der Innenumfangsseite des Trommelmantels 2 her verengt. Auf diese Weise wird die Waschflüssigkeit, also das Waschwasser, aber auch zumindest teilweise das zu waschende Schüttgut in ausreichendem Maße in der Waschtrommel 1 aufgestaut. Diese ringförmige Stirnwand 14 ist daher zweckmäßig geschlossen ausgeführt.

An dem Innenumfangsrand 14a dieser ringförmigen Stirnwand 14 ist ein sich in Förderrichtung (Pfeile 6) des Schüttgutes erweiternder Gutauslaufkonus bzw. Überlaufkonus 15 angebracht, der einen wesentlichen Teil des Auslaufs 4 bildet.

Je nach der gewünschten Stauhöhe des Waschwassers in der Waschtrommel 1 und je nach Größe des Konusöffnungswinkels des Trommelmantels 2 kann die Stirnseite am Trommeleinlaufende 1a ebenfalls eine entsprechende ringförmige, geschlossene Stirnwand aufweisen, oder die Stirnseite dieses Trommeleinlaufendes 1a kann vollkommen offen sein. Der Einlauf 3 in dieses Trommeleinlaufende 1a kann dabei beispielsweise durch eine - in Fig.1 nur angedeutete - geeignete Einlaufschurre, ein Einlaufrohr oder dergleichen gebildet sein.

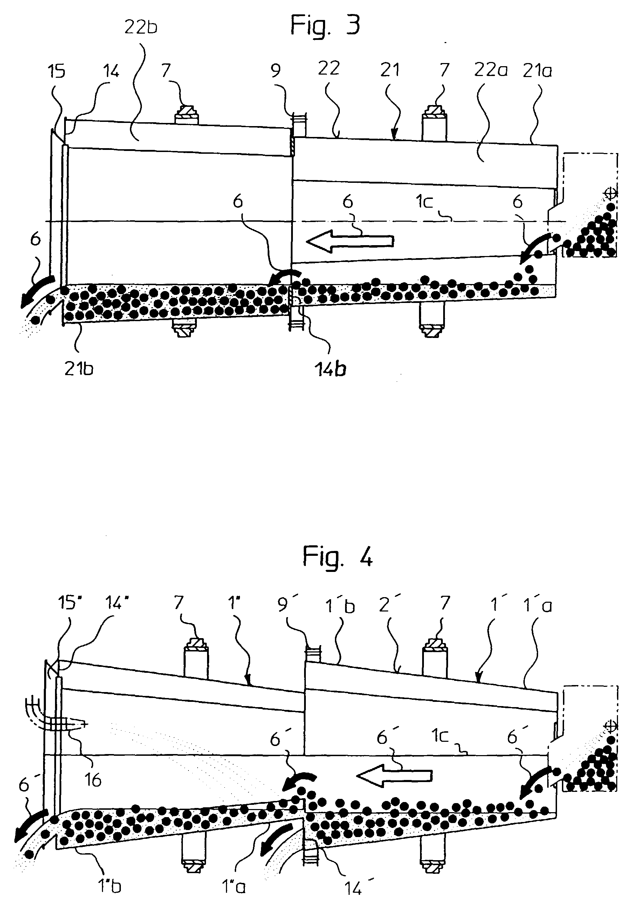

Während beim zuvor anhand der Fig.1 und 2 beschriebenen ersten Ausfürungsbeispiel der erfindungsgemäßen Waschtrommel die einzige Waschtrommel 1 mit über ihre Länge gleichförmig konischem Trommelmantel vorgesehen ist, kann dieser Trommelmantel bzw. die Waschtrommel gemäß einer Ausführungsvariante zum ersten Beispiel (Fig.1 und 2) auch in wenigstens zwei Längsabschnitte unterteilt sein, wie es anhand der Fig.3 ganz schematisch veranschaulicht ist. Hierin sind alle im wesentlichen gleichartig wie im Beispiel der Figuren 1 und 2 vorhandenen Bauteile der Einfachheit halber mit denselben Bezugszeichen versehen, während alle Abwandlungen ähnlicher Bauteile unter Vorsetzen einer 2 bezeichnet sind.

Betrachtet man im Sinne des Zuvorgesagten diese Ausführungsvariante gemäß Fig.3, dann ist die insgesamt an sich konusförmig ausgebildete Waschtrommel 21 mit ihrem Trommelmantel 22 - in diesem Ausführungsbeispiel - in zwei Längsabschnitte 22a und 22b unterteilt. Betrachtet man ergänzend zu Fig.3 nochmals die Querschnittsansicht gemäß Fig.2, dann erkennt man dort neben dem in durchgehenden Schnittlinien veranschaulichten achteckigen Querschnitt des Trommelmantels 2 in strichpunktierten Linien noch ein um die Längsmittelachse 1c in Umfangsrichtung verdrehtes zweites Achteck. Hierdurch wird veranschaulicht, daß die beiden Längsabschnitte 22a und 22b der Waschtrommel 21 bzw. ihres Trommelmantels 22 - in bezug auf ihre Vieleckseiten - nicht unmittelbar aneinander anschließend bzw. durchgehend miteinander verbunden, sondern um die gemeinsame Längsmittelachse 1c in Umfangsrichtung gegeneinander verdreht sind, und zwar vorzugsweise - wie in Fig.2 zu erkennen - um etwa die halbe Länge einer Vieleckseite des Innenquerschnitts des Trommelmantels 22. Durch diese Art der Unterteilung der Waschtrommel 21 in zwei unmittelbar aneinander anschließende und fest miteinander verbundene Längsabschnitte 22a, 22b ergibt sich im Übergangsbereich vom ersten Längsabschnitt 22a in den zweiten Längsabschnitt 22b in wenigstens einigen Umfangsabschnitten eine Art zusätzliches mittleres Stauwehr (Übergangs-Stauwehr) 14b. Zu dem so ausgebildeten Übergangsbereich wird das gesamte Schüttgut nie gleichzeitig angehoben und weitergefördert, sondern nur jeweils in Teilmengen (etwa halbe Teilmengen). Hierdurch lassen sich weitere Vorteile im Betrieb der Waschtrommel erzielen: Zum einen kann die auf die Schüttgutbewegung in der Waschtrommel 21 zurückzuführende Geräuschentwicklung (Rumpeln usw.) erheblich vermindert werden und zum andern wird eine verhältnismäßig stoßfreie (ruhige) Drehbewegung der Waschtrommel 21 erzielt, wodurch die installierte Antriebsleistung für die Waschtrommel 21 - im Vergleich zu bekannten Ausführungen - bei verbesserter Durchsatz- und Waschleistung deutlich reduziert werden kann.

Nach einem in Fig.4 veranschaulichten weiteren Ausführungsbeispiel der Erfindung kann es in manchen praktischen Anwendungsfällen auch von Vorteil sein, mehrere Waschtrommeln in einer erfindungsgemäßen Waschvorrichtung hintereinander anzuordnen. Da in diesem weiteren Ausführungsbeispiel (Fig.4) die Waschtrommeln selbst weitgehend gleichartig ausgeführt sein können, wie es weiter oben anhand der Fig.1 und 2 beschrieben worden ist, werden gleichartige Vorrichtungsteile der Einfachheit halber mit den selben Bezugszeichen unter Hinzufügung eines Striches bzw. eines Doppelstriches bezeichnet, so daß eine nochmalige detaillierte Erläuterung dieser Bauteile weitgehend unterbleiben kann.

Nach diesem zweiten Ausführungsbeispiel gemäß Fig.4 sind zwei Waschtrommeln 1', 1'' zum unmittelbaren, aufeinanderfolgenden Waschen des Schüttgutes axial direkt hintereinander angeordnet. Dabei ist es zwar grundsätzlich möglich, beide Waschtrommeln 1', 1'' als vollkommen gesondert gelagerte und rotierend antreibbare Waschtrommeln auszuführen, wodurch die Waschvorgänge (insbesondere Vor- und Nachwäsche) in diesen beiden Trommeln dann mit unterschiedlicher Intensität durchgeführt werden könnten.

Im allgemeinen ist es jedoch ausreichend und zweckmäßig sowie in baulicher Hinsicht auch besonders vorteilhaft, wenn diese Waschtrommeln 1' und 1'' - wie in Fig.4 veranschaulicht - koaxial hintereinander angeordnet und dabei zu einer Trommeleinheit drehfest miteinander verbunden sind, so daß gewissermaßen eine Waschtrommel bzw. Waschtrommeleinheit mit mehreren Waschkammern (hier zwei Waschkammern) gebildet wird, wobei der Innenraum jeder Waschtrommel 1' bzw. 1'' eine Waschkammer darstellt. Beide hintereinander angeordneten Waschtrommeln 1', 1'' und somit die durch sie gebildeten Waschkammern stehen somit in offener Verbindung, so daß das zu waschende Schüttgut entsprechend den, Pfeilen 6' kontinuierlich fortlaufend durch die Trommeleinheit transportiert und dabei - ggf. stufenweise - intensiv gewaschen werden kann.

Unter Bezugnahme auf die Erläuterungen zu beiden vorhergehenden Beispielen (Figuren 1 bis 3) sei erwähnt, daß die beiden axial direkt aufeinanderfolgenden Waschtrommeln 1' und 1'' - im Trommelquerschnitt (etwa ähnlich wie in Fig.2) betrachtet - entweder sich mit ihren Vieleckseiten jeweils gegenüberliegen (entsprechend Beispiel der Figuren 1 und 2) oder in bezug auf ihre Vieleckseiten um die Längsmittelachse 1c in Umfangsrichtung gegeneinander verdreht sein können (entsprechend der anhand Fig.3 beschriebenen Ausführungsvariante).

Bei dieser Ausführungsform (Fig.4) ist - jeweils in Förderrichtung (Pfeile 6') des Schüttgutes betrachtet - das Trommelauslaufende 1'b der vorderen, ersten Waschtrommel 1' direkt an das Trommeleinlaufende 1''a der nachfolgenden, zweiten Waschtrommel 1'' angeschlossen. Ferner ist es hierbei zweckmäßig, wenn die am Trommelauslaufende 1'b der ersten Waschtrommel 1' angebrachte ringförmige Stirnwand 14' - etwa in Form eines Siebes bzw. einer Lochwand - mit Waschflüssigkeits-Durchtrittsöffnungen versehen ist, während die Stirnwand 14'' am Trommelauslaufende 1''b der hinteren, zweiten Waschtrommel 1'' geschlossen ausgeführt und mit dem Gutauslauf- bzw. Überlaufkonus 15'' versehen ist. Auf diese Weise ist es möglich, das Waschwasser aus der ersten Waschtrommel 1' abzuleiten und in der zweiten Waschtrommel 1'' frisches Waschwasser - wie durch eine Zuführeinrichtung 16 in Fig.4 veranschaulicht - einzubringen; die Waschvorgänge in den beiden aufeinanderfolgenden Waschtrommeln 1' und 1'' können somit besonders intensiv und/oder auch mit unterschiedlichen Waschflüssigkeiten betrieben werden.

Bei diesem anhand Fig.4 beschriebenen Ausführungsbeispiel ist es herstellungstechnisch besonders günstig, wenn die hintereinander angeordneten Waschtrommeln 1', 1'' im wesentlichen gleichartig bzw. gleichförmig ausgeführt sind, obwohl es generell für besondere Einsatzfälle auch zweckmäßig sein kann, wenn die aufeinanderfolgenden Waschtrommeln - obwohl nach dem gleichen Konstruktionsprinzip gebaut - unterschiedliche Größe, d.h. insbesondere unterschiedliche Längen, Durchmesser und Konusformen, aufweisen können.

Wenn die aufeinanderfolgenden Waschtrommeln 1', 1'' - wie im Beispiel der Fig.4 - zu einer Baueinheit drehfest miteinander verbunden sind, dann vereinfacht sich auch ihr Drehantrieb. Dies bedeutet, daß die beiden Waschtrommeln 1', 1'' um eine gemeinsame Längsmittelachse 1c rotierend antreibbar sind. Diese Trommeleinheit aus den beiden Waschtrommeln 1', 1'' kann somit mit einem gemeinsamen Drehantrieb versehen sein, von dem in Fig.4 der Einfachheit halber nur der Triebstock 9' angedeutet ist, der in diesem Falle beispielsweise auf dem Außenumfang des Trommelmantels 2' der ersten Waschtrommel 1' befestigt ist; der Drehantrieb selbst kann in gleicher Weise geschehen, wie es anhand der Fig.1 und 2 veranschaulicht und beschrieben ist. Auch die Drehabstützung dieser Trommeleinheit kann in gleicher Weise geschehen, wie es anhand der Fig.1 und 2 erläutert ist, d.h. im vorliegenden Falle kann es ausreichend sein, wenn die hinreichend fest miteinander verbundenen Waschtrommeln 1' und 1'' nur je einen entsprechenden Laufring 7 aufweisen, die dann wiederum auf - in Fig.4 nicht veranschaulichten - Tragrollen gelagert bzw. abgestützt sind.

Bei dem zuletzt anhand Fig.4 erläuterten Ausführungsbeispiel ist es gemäß einer Ausführungsvariante auch möglich, an den Trommelauslaufenden 1'b, 1''b der vorderen und der hinteren Waschtrommeln 1' bzw. 1'' je eine geschlossene Stirnwand anzubringen, d.h. es wird bei dieser Ausführungsvariante anstelle der anhand Fig.4 beschriebenen, mit Waschflüssigkeits-Durchtrittsöffnungen versehenen Stirnwand 14' am Auslaufende 1'b der vorderen Waschtrommel 1' eine vollkommen geschlossene Stirnwand vorgesehen, die dann eine Art Übergangsstauwehr bildet.

## Patentansprüche

1. Vorrichtung zum Waschen von stückigem Schüttgut, insbesondere von Feldfrüchten und Steinen, mit wenigstens einer um ihre Längsmittelachse (1c) rotierend antreibbaren Waschtrommel (1, 1', 1''), die einen an seinem Umfang im wesentlichen geschlossenen Trommelmantel (2) zur Aufnahme von Waschflüssigkeit und zu waschendem Schüttgut, einen Einlauf (3) an einem Trommelende (1a) und einen Auslauf (4) am entgegengesetzten anderen Trommelende (1b) sowie wenigstens eine Waschflüssigkeits-Zuführeinrichtung (5, 16) enthält,
dadurch gekennzeichnet,
daß die Waschtrommel (1, 21, 1', 1'') einen polygonalen Innenquerschnitt aufweist.

2. Vorrichtung nach Anspruch 1, dadurch gekennzeichnet, daß der Trommelmantel (2, 22) der Waschtrommel (1, 21, 1', 1'') sich vom Trommeleinlaufende (1a) zum Trommelauslaufende (1b) konusförmig erweiternd ausgebildet ist.

3. Vorrichtung nach Anspruch 1 oder 2, dadurch gekennzeichnet, daß die Längsmittelachse (1c) der Waschtrommel (1, 1', 1'') im wesentlichen horizontal oder in Förderrichtung des Schüttgutes unter einem spitzen Winkel gegenüber der Horizontalen geneigt angeordnet ist.

4. Vorrichtung nach Anspruch 1, dadurch gekennzeichnet, daß der Trommelmantel (2) an seiner Innenseite eine relativ abriebfeste und/oder geräuschdämmende Innenauskleidung aufweist.

5. Vorrichtung nach Anspruch 4, dadurch gekennzeichnet, daß die Innenauskleidung im wesentlichen aus Gummi oder gummiartigem Kunststoffmaterial hergestellt ist.

6. Vorrichtung nach Anspruch 1 oder 2, dadurch gekennzeichnet, daß zumindest an der Stirnseite des Trommelauslaufendes (1b, 21b, 1'b, 1''b) eine den lichten Durchtrittsquerschnitt dieses Trommelauslaufendes von der Innenumfangsseite des Trommelmantels (2) her verengende, ringförmige Stirnwand (14, 14', 14'') angeordnet ist.

7. Vorrichtung nach Anspruch 6, dadurch gekennzeichnet, daß an dem Innenumfangsrand (14a) der ringsförmigen Stirnwand (14, 14'') ein sich in Förderrichtung (6, 6') des Schüttgutes erweiternder Gutauslaufkonus (15, 15'') angebracht ist.

8. Vorrichtung nach Anspruch 6, dadurch gekennzeichnet, daß die ringförmige Stauwand (14, 14'') am Trommelauslaufende (1b, 21b, 1''b) geschlossen ausgeführt ist.

9. Vorrichtung nach den Ansprüchen 2, 7 und 8, dadurch gekennzeichnet, daß die konusförmig ausgebildete Waschtrommel (21) mit ihrem Trommelmantel (22) in wenigstens zwei Längsabschnitte (22a, 22b) unterteilt ist, die um die gemeinsame Längsmittelachse (1c) in Umfangsrichtung gegeneinander verdreht sind, vorzugsweise um etwa die halbe Länge einer Vieleckseite des Innenquerschnitts des Trommelmantels (22).

10. Vorrichtung nach Anspruch 1 oder 2, dadurch gekennzeichnet, daß wenigstens zwei Waschtrommeln (1', 1'') zum unmittelbaren, aufeinanderfolgenden Waschen des Schüttgutes axial direkt hintereinander angeordnet sind.

11. Vorrichtung nach Anspruch 10, dadurch gekennzeichnet, daß die axial direkt aufeinanderfolgenden Waschtrommeln (1', 1'') - im Trommelquerschnitt betrachtet - sich mit ihren Vieleckseiten jeweils gegenüberliegen.

12. Vorrichtung nach Anspruch 10, dadurch gekennzeichnet, daß die axial direkt aufeinanderfolgenden Waschtrommeln (1', 1'') - im Trommelquerschnitt betrachtet - in bezug auf ihre Vieleckseiten in Umfangsrichtung gegeneinander verdreht sind.

13. Vorrichtung nach Anspruch 10 sowie wenigstens einem der Ansprüche 6 bis 8, dadurch gekennzeichnet, daß die Waschtrommeln (1', 1'') unter Ausbildung je einer Waschkammer koaxial hintereinander angeordnet und zu einer Trommeleinheit drehfest miteinander verbunden sind, wobei - jeweils in Förderrichtung (6') des Schüttgutes betrachtet - das Trommelauslaufende (1'b) der vorderen Waschtrommel (1') direkt an das Trommeleinlaufende (1''a) der nachfolgenden Waschtrommel (1'') angeschlossen ist.

14. Vorrichtung nach Anspruch 13, dadurch gekennzeichnet, daß an den Trommelauslaufenden (1'b, 1''b) der vorderen und der hinteren Waschtrommeln (1', 1'') je eine geschlossene Stirnwand angebracht ist, wobei die Stirnwand am Auslaufende (1'b) der vorderen Waschtrommel (1') ein Übergangsstauwehr bildet.

15. Vorrichtung nach Anspruch 13, dadurch gekennzeichnet, daß die am Trommelauslaufende (1'b) der vorderen Waschtrommel (1') angebrachte ringförmige Stauwand (14') mit Waschflüssigkeits-Durchtrittsöffnungen versehen ist, während die Stirnwand (14'') am Trommelauslaufende (1''b) der hinteren Waschtrommel (1'') geschlossen ausgeführt und mit dem Gutauslaufkonus (15'') versehen ist.

16. Vorrichtung nach Anspruch 10, dadurch gekennzeichnet, daß die Waschtrommeln (1', 1'') im wesentlichen gleichförmig ausgeführt sind.

17. Vorrichtung nach Anspruch 11, dadurch gekennzeichnet, daß die drehfest miteinander verbundenen Waschtrommeln (1', 1'') einen gemeinsamen Drehantrieb (9') aufweisen.
